# FASCICULE DE BREVET EUROPEEN

(11) **EP 2 925 578 B1**
(45) Date de publication et mention de la délivrance du brevet: **29.03.2017**
(21) Numéro de dépôt: 13783296.0
(22) Date de dépôt: 21.10.2013
(51) Int. Cl.: B60T 13/52, B60T 17/22, G01L 11/00

(54) **PROCEDE D'ESTIMATION DE LA PRESSION DANS UN RESERVOIR A DEPRESSION D'UN SERVOFREIN**
UNTERDRUCKSCHÄTZUNGSVERFAHREN EINES UNTERDRUCKTANKS EINES UNTERDRUCKBREMSKRAFTVERSTÄRKERS
VACUUM TANK PRESSURE ESTIMATION METHOD FOR A VACUUM BRAKE SERVO TANK

(30) Priorité: 29.11.2012 FR 1261381
(43) Date de publication de la demande: 07.10.2015
(73) Titulaire: Renault S.A.S., 92100 Boulogne-Billancourt (FR)
(72) Inventeur: AZZI, Hamid, F-78310 Maurepas (FR); SANCHEZ, Régis, F-78120 Rambouillet (FR)
(86) Numéro de dépôt international: PCT/EP2013/071978
(87) Numéro de publication internationale: WO 2014/082793

(56) Documents cités:
- FR-A1- 2 829 451
- US-A1- 2007 289 827

## Description

L'invention concerne un procédé d'estimation de la pression dans un réservoir à dépression pour un servofrein à dépression de véhicule automobile.

L'invention concerne plus particulièrement un procédé d'estimation de la pression dans un réservoir à dépression d'un servofrein à dépression de véhicule automobile, le véhicule comportant :
- un moteur à combustion interne ;
- au moins un dispositif de freinage commandé par la pression d'un fluide de freinage ;
- un maître-cylindre qui commande la pression du fluide de freinage et qui est actionné par un organe d'actionnement mobile entre une position de repos et une position extrême d'actionnement ;
- un servofrein qui est interposé entre l'organe d'actionnement et le maître-cylindre pour amplifier l'effort de l'organe d'actionnement au moyen d'une dépression fournie par un réservoir maintenu en dépression, à une pression d'assistance, lorsque le moteur est démarré ;
- un moyen de détection du déplacement de l'organe d'actionnement au-delà d'une position intermédiaire de garde ;
- un capteur de pression qui est agencé de manière à mesurer la pression de freinage du fluide de freinage.

Les véhicules automobiles sont généralement équipés de dispositifs de freinage, tels que des freins à disque, qui sont commandés par la pression d'un fluide de freinage. La pression du fluide de freinage est plus particulièrement commandée par un maître-cylindre qui est actionné par le conducteur via un organe d'actionnement communément formé par une pédale de freinage.

La pression requise pour faire fonctionner efficacement les dispositifs de freinage est très élevée. Pour assister le conducteur dans son effort de freinage, il est connu d'équiper le véhicule d'un servofrein à dépression, aussi appelé "brake booster" ou "master vac". A cet effet, le servofrein utilise une dépression produite lorsque le moteur est démarré. La dépression est par exemple produite par une pompe à vide entraînée par le moteur, ou encore elle est produite directement par le fonctionnement du moteur, au niveau du circuit d'admission d'air.

Par ailleurs, afin de réduire la pollution et d'économiser du carburant, il est connu d'équiper les véhicules à moteur à combustion avec un système d'arrêt et de démarrage automatique, plus connu sous l'appellation anglosaxonne "start and stop". Un tel système permet d'arrêter automatiquement le moteur à combustion lorsque le véhicule est arrêté pour une courte durée, par exemple à un feu rouge ou dans des encombrements. Le moteur est redémarré automatiquement lorsque le conducteur effectue une manoeuvre pour faire repartir le véhicule, par exemple en appuyant sur la pédale d'accélération ou en engageant une vitesse.

Néanmoins, un tel dispositif présente l'inconvénient d'interrompre la production de dépression par le moteur alors même que le véhicule est toujours dans une situation de circulation. Ainsi, si le conducteur pompe avec la pédale de frein durant un arrêt automatique du moteur, la dépression dans le servofrein n'est plus suffisante pour permettre d'actionner efficacement le maître-cylindre.

Le document FR 2 829 451 A1 décrit un procédé de calibrage d'un servomoteur de freinage pneumatique sans réservoir externe pour maintenu de vide.

Pour résoudre ce problème, il est connu d'interposer un réservoir à dépression entre la source de dépression et le servofrein. Ce réservoir permet ainsi au conducteur de bénéficier d'une réserve de dépression suffisante pour actionner plusieurs fois le maître-cylindre.

Néanmoins cette solution ne permet pas de faire face à toutes les situations.

On a donc proposé de redémarrer automatiquement le moteur à combustion lorsque la pression dans le réservoir à dépression devient supérieure à un seuil maximal déterminé. Pour ce faire, il est connu de mesurer directement la pression dans le réservoir à dépression au moyen d'un capteur de pression.

Toutefois, si cette solution donne satisfaction sur un plan technique, elle n'est pas avantageuse économiquement car elle nécessite l'installation d'un capteur de pression dédié au réservoir à dépression.

L'invention propose de résoudre ce problème en estimant la pression présente dans le réservoir à dépression au moyen de capteurs déjà existant dans le véhicule. L'invention propose ainsi un procédé du type décrit précédemment, caractérisé en ce qu'il comporte :
- une première étape de calcul de la pression de freinage qui est répétée cycliquement ;
- une deuxième étape de calcul de l'amplitude d'une diminution de pression au cours de laquelle le maximum puis le minimum atteints successivement par la pression de freinage sont mémorisés, et au cours de laquelle l'amplitude de la diminution de pression de freinage est calculée en effectuant la différence entre le maximum et le minimum ;
- une troisième étape qui est déclenchée à l'issue de la deuxième étape et au cours de laquelle l'augmentation de la pression dans le réservoir à dépression est estimée en fonction de l'amplitude calculée à la deuxième étape.

Selon d'autres caractéristiques de l'invention :
- au cours de la première étape, la pression de freinage calculée est égale à :
   -- une valeur de repos tant qu'aucun déplacement de l'organe d'actionnement n'est détecté ; ou à,
   -- la plus grande valeur entre la mesure de la pression de freinage par le capteur et une pression minimale déterminée lorsqu'un déplacement de l'organe d'actionnement est détecté ;
- la troisième étape est déclenchée lorsque le moteur est arrêté ;
- le procédé comporte une quatrième étape de demande de redémarrage au cours de laquelle le moteur est redémarré lorsque la pression dans le réservoir est supérieure à un seuil déterminé ;
- au cours de la troisième étape, l'augmentation de pression dans le réservoir est estimée en fonction de l'amplitude de la diminution de pression à partir d'une courbe de correspondance prédéterminée ;
- la courbe prédéterminée présente la forme d'un escalier de manière à faire correspondre une augmentation déterminée de la pression avec un intervalle déterminé de valeurs d'amplitude de diminution de pression de freinage ;
- lorsque le moteur est redémarré, la pression dans le réservoir est réinitialisée à une valeur minimale ;
- lors de la deuxième étape, une première valeur de pression est considérée comme un maximum de pression lorsqu'une deuxième valeur de pression calculée au cycle suivant de la première étape est strictement inférieure à la première valeur ;
- lors de la deuxième étape, une première valeur de pression est considérée comme un minimum lorsque :
   -- un maximum a été atteint précédemment ;
   -- et une deuxième valeur de pression calculée au cycle suivant de la première étape est supérieure ou égale à la première valeur de pression ;
- la deuxième étape est réitérée lorsqu'un minimum a été atteint.

D'autres caractéristiques et avantages de l'invention apparaitront au cours de la lecture de la description détaillée qui va suivre pour la compréhension de laquelle on se reportera aux dessins annexés parmi lesquels :
- la figure 1 est un schéma qui représente un véhicule automobile à moteur à combustion équipé d'un dispositif de freinage comportant un servofrein à dépression ;
- la figure 2 est une vue en section qui représente le servofrein à dépression de la figure 1 dans un état de repos ;
- la figure 3 est une vue similaire à celle de la figure 2 dans laquelle le servofrein est dans un état actionné ;
- la figure 4 est un schéma-bloc qui représente un procédé d'estimation de la pression dans un réservoir à vide du servofrein réalisé selon les enseignements de l'invention ;
- la figure 5 est un schéma-bloc qui représente plus en détail la deuxième étape du procédé de la figure 4 ;
- la figure 6 est un diagramme qui représente la variation de pression de fluide de freinage en fonction du temps ;
- la figure 7 est un diagramme qui représente l'augmentation estimée de pression d'assistance dans le réservoir en fonction de l'amplitude de la diminution de pression de freinage.

Dans la suite de la description, des éléments présentant une structure identique ou des fonctions analogues seront désignés par un même numéro de référence.

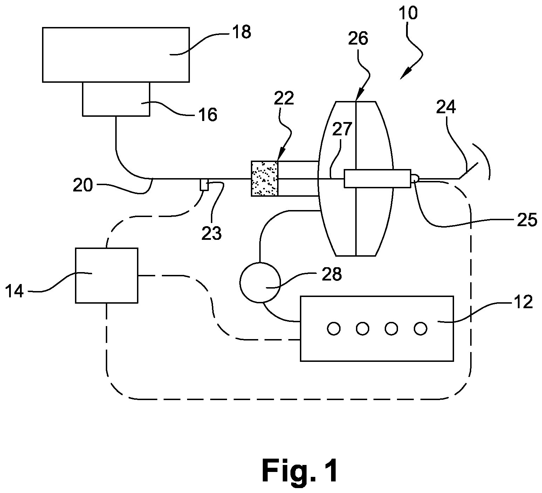

On a représenté schématiquement à la figure 1 un véhicule automobile 10 mu par un moteur 12 à combustion. Le moteur 12 à combustion est susceptible d'être arrêté et redémarré automatiquement par une unité 14 électronique de commande.

Le véhicule 10 comporte aussi des moyens de freinage du véhicule. Les moyens de freinage comportent ici plusieurs dispositifs 16 de freinage dont chacun est associé à une roue 18 du véhicule 10. Pour simplifier les dessins seuls une roue 18 et le dispositif 16 de freinage associé ont été représentés.

Le dispositif 16 de freinage est par exemple formé par un frein à disque qui comporte des patins de frein (non représentés) qui sont portés par un étrier fixe et qui sont susceptibles d'être déplacés entre une position de repos dans laquelle ils sont écartés du disque et une position de serrage d'un disque de frein (non représenté) solidaire en rotation avec la roue 18.

Le dispositif 16 de freinage est commandé entre sa position de repos et sa position de serrage par la pression "Pmc" d'un fluide de freinage qui est contenu dans un circuit 20 hydraulique. De manière connue, le fluide de freinage est ici un liquide incompressible.

La pression "Pmc" du fluide de freinage est commandée par un maître-cylindre 22. De manière simplifiée, le maître-cylindre 22 agit comme un piston qui est susceptible d'être déplacé entre une position de repos et une position de compression du fluide de freinage contenu dans le circuit 20 hydraulique.

Par mesure de sécurité, le circuit 20 hydraulique comporte un capteur 23 de pression qui est agencé de manière à mesurer à tout instant la pression "Pmc" du fluide de freinage. Cette pression sera par la suite appelée "pression de freinage Pmc". Le capteur 23 envoie un signal représentatif de la pression de freinage "Pmc" à destination de l'unité 14 électronique de commande.

Une tige 27 de poussée du piston du maître-cylindre 22 est susceptible d'être poussée par le conducteur du véhicule 10 par l'intermédiaire d'un organe 24 d'actionnement. L'organe 24 d'actionnement est ici une pédale de freinage qui est mobile entre une position de repos vers laquelle elle est rappelée élastiquement, et une position extrême d'actionnement dans laquelle la pression "Pmc" du fluide de freinage augmente pour actionner le dispositif 16 de freinage vers sa position de freinage.

Cependant, la pression "Pmc" de freinage requise pour que le dispositif 16 de freinage freine efficacement le véhicule 10 nécessite un effort très élevé sur la tige 27 de poussée du maître-cylindre 22.

Aussi, pour assister le conducteur, il est connu d'interposer un servofrein 26 à dépression entre l'organe 24 d'actionnement et le maître-cylindre 22 afin d'amplifier l'effort de l'organe 24 d'actionnement au moyen d'une dépression fournie par un réservoir 28 maintenu en dépression lorsque le moteur 12 est démarré. La pression dans le réservoir 28 est alors égale à une pression minimale d'assistance "Pass_min".

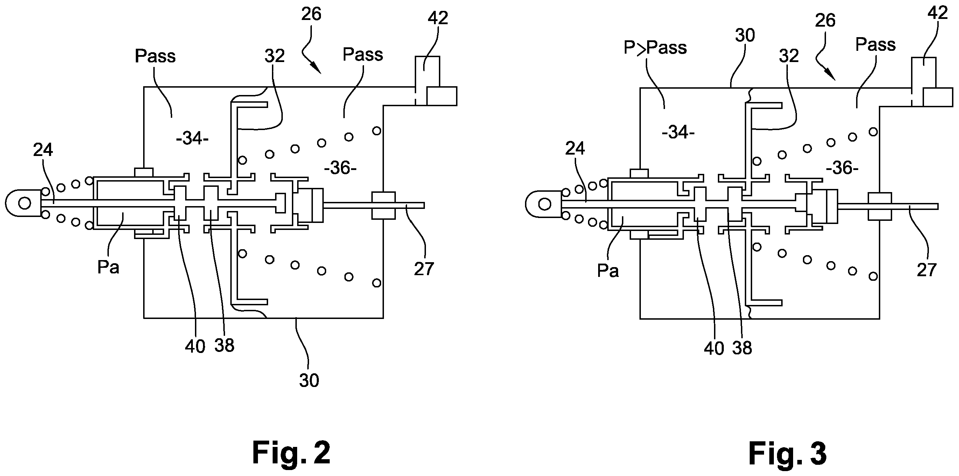

Le principe de fonctionnement du servofrein 26 à dépression est expliqué plus en détail aux figures 2 et 3.

Le servofrein 26 comporte un carter 30 rigide divisé par une cloison 32 souple en une chambre arrière 34 et une chambre avant 36. La cloison 32 est susceptible de solliciter la tige 27 de poussée du maître-cylindre 22 vers sa position de compression du fluide de freinage. La cloison 32 comporte aussi deux clapets 38, 40 qui sont commandés par l'organe 24 d'actionnement.

Les deux chambres 34, 36 sont susceptibles de communiquer ensemble par l'intermédiaire d'un premier clapet 38 qui est commandé par l'organe 24 d'actionnement.

La chambre arrière 34 est susceptible de communiquer avec la pression "Patm" atmosphérique par l'intermédiaire d'un deuxième clapet 40 qui est aussi commandé par l'organe 24 d'actionnement.

La chambre avant 36 est susceptible d'être alimentée avec une première pression "Pass", dite d'assistance, qui est inférieure à la pression "Patm" atmosphérique par l'intermédiaire d'un orifice 42 communiquant avec le réservoir 28 à dépression.

Lorsque l'organe 24 d'actionnement est dans sa position de repos, comme représenté à la figure 2, les deux chambres 34, 36 communiquent ensemble par l'intermédiaire du premier clapet 38 tandis que le deuxième clapet 40 est fermé.

Lorsque l'organe 24 de freinage est actionné, le premier clapet 38 est fermé, isolant ainsi les deux chambres 34, 36. Le deuxième clapet 40 est ouvert laissant ainsi pénétrer de l'air à pression atmosphérique "Patm" dans la chambre arrière 34. La différence de pression "Patm-Pass" entre les deux chambres 34, 36 entraîne un déplacement de la cloison 32, et donc de la tige 27 de poussée du maître-cyindre 22, vers l'avant jusqu'à fermeture du deuxième clapet 40, le premier clapet 38 demeurant fermé. La quantité d'air atmosphérique introduite dans la chambre arrière 34 est d'autant plus importante que l'organe 24 d'actionnement est enfoncé profondément. En d'autres termes, la pression de freinage "Pmc" augmente d'autant plus que le volume d'air à pression atmosphérique "Patm" introduit dans la chambre arrière 34 du servofrein 26 est important.

Lorsque le conducteur relâche l'organe 24 d'actionnement, le premier clapet 38 s'ouvre, tandis que le deuxième clapet 40 demeure fermé. Ceci entraîne un rééquilibrage de pression entre les deux chambres 34, 36, et une expulsion de l'air à pression atmosphérique vers le réservoir 28 à dépression.

Ainsi, comme expliqué précédemment, durant un arrêt du moteur, la pression d'assistance "Pass" dans le réservoir 28 à dépression augmente uniquement lorsque l'organe 24 d'actionnement revient vers sa position de repos, c'est-à-dire lorsque la pression "Pmc" de freinage diminue.

Par ailleurs, comme représenté à la figure 1, l'organe 24 d'actionnement est susceptible de déclencher un moyen de détection 25 lorsqu'il est déplacé depuis sa position de repos au-delà d'une position intermédiaire de garde. Le moyen de détection 25 est par exemple formé par un contacteur ou un interrupteur.

Le déplacement de l'organe 24 d'actionnement entre la position de repos et la position intermédiaire de garde n'entraîne pas d'ouverture du deuxième clapet 40 dans le servofrein 26. Il s'agit d'un déplacement "à vide".

Au-delà de la position de garde, le contacteur 25 est déclenché. Ce contacteur 25 déclenche entre autres l'allumage des feux de stop du véhicule 10. Au-delà de la position de garde, le deuxième clapet 40 est ouvert de manière à entraîner un déplacement de la tige 27 de poussée du maître-cylindre 22. Cependant, au début de ce déplacement, la pression "Pmc" de freinage n'augmente pas de manière sensible pour le capteur 23. En effet, au repos, les patins de freins sont écartés du disque de frein avec un jeu permettant la rotation sans frottement du disque. Le début de déplacement du piston correspond au déplacement des patins jusqu'au contact du disque. Un tel déplacement ne nécessite pas une augmentation sensible de pression de freinage "Pmc".

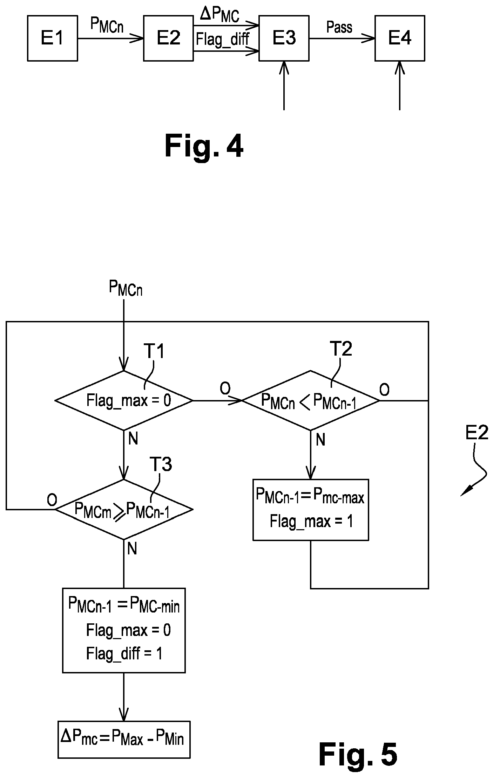

Partant de ces constats, l'invention propose un procédé d'estimation de la pression d'assistance "Pass" dans le réservoir 28 de dépression lorsque le moteur est à l'arrêt. Ce procédé est décrit en référence aux figures 4 et 5.

Le procédé comporte une première étape "E1" de calcul de la pression de freinage "Pmc". Cette étape "E1" est répétée cycliquement par l'unité 14 électronique de commande à une fréquence élevée.

A un instant "t" déterminé, la pression "Pmcₙ" de freinage est égale une valeur minimale de repos "V0" déterminée lorsque le contacteur 25 ne détecte pas de déplacement de l'organe 24 d'actionnement. Sinon, lorsque le contacteur 25 détecte un déplacement de l'organe 24 d'actionnement, la pression "Pmcₙ" de freinage est égale à la plus grande valeur entre la mesure de la pression par le capteur "Vmes" et une pression de garde déterminée "V1".

La pression minimale de repos "V0" correspond à la pression du fluide de freinage lorsque les patins sont dans leur position de repos.

La pression de garde "V1" correspond à la pression nécessaire pour déplacer les patins jusqu'au contact du disque. Cette pression "V1" n'étant pas ou peu détectable par le capteur 23, cette pression est mémorisée directement dans l'unité 14 électronique de commande. Ainsi, au lieu d'être mesurée par le capteur 23, elle est attribuée par l'unité 14 électronique de commande lors du déclenchement du contacteur 25.

Au cycle "t+1" suivant, l'unité 24 électronique de commande calcule la nouvelle valeur de la pression de freinage "Pmcₙ₊₁".

Avantageusement, la succession chronologique des valeurs de pression de freinage "Pmc" forme un signal de pression de freinage qui peut être filtré par un filtre du premier ordre (non représenté).

Lors d'une deuxième étape "E2" de calcul d'une diminution de pression, l'unité 14 électronique de commande calcule l'amplitude "ΔPmc" de la diminution de pression de freinage lors d'une baisse de cette pression.

La deuxième étape "E2" est représentée plus en détails à la figure 5. Au cours de cette étape "E2", le maximum "Pmc_max" puis le minimum "Pmc_min" atteints successivement par la pression de freinage "Pmc" sont mémorisés par l'unité 14 électronique de commande.

Pour ce faire, comme représenté à la figure 5, le test "T1" permet de vérifier qu'aucun maximum "Pmc_max" n'a déjà été trouvé. C'est le cas lorsqu'une première variable booléenne "Flag_max" est égale à zéro.

En ce cas, le test "T2" permet de vérifier que la pression de freinage "Pmcₙ" calculée à un cycle actuel "t" est strictement inférieure à la pression de freinage "Pmcₙ₋₁" calculée au cycle précédent "t-1".

Si ce n'est pas le cas, la pression de freinage "Pmc" continue à augmenter ou tout au moins à stagner. Le maximum "Pmc_max" n'est donc pas considéré comme atteint. L'étape "E2" est alors réitérée.

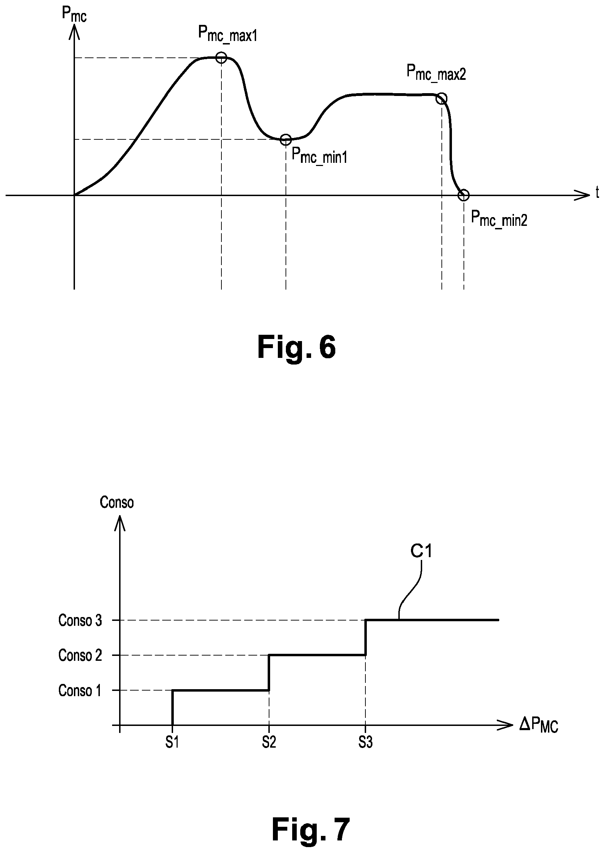

Si c'est le cas, cela signifie que la pression de freinage "Pmc" commence à baisser. La valeur de la pression de freinage précédente "Pmcₙ₋₁" est considérée comme étant le maximum "Pmc_max", et elle est mémorisée dans l'unité 14 électronique de commande. La valeur de la première variable booléenne "Flag_max" devient égale à un. Un exemple de détection de deux maxima "Pmc_max1" et "Pmc_max2" est illustré à la figure 6.

On réitère à nouveau l'étape "E2", cependant, du fait du changement de valeur de la première variable booléenne "Flag_max", on teste à présent au test "T3" que la pression de freinage "Pmc" atteigne son minimum. Pour ce faire, à chaque itération de la deuxième étape "E2", on vérifie que la pression de freinage "Pmcₙ" calculée au cycle actuel "t" est supérieure ou égale à la pression de freinage "Pmcₙ₋₁" calculée au cycle précédent "t-1".

Si ce n'est pas le cas, la pression de freinage "Pmc" continue à baisser. Le minimum "Pmc_min" n'a donc pas été atteint. L'étape "E2" est alors réitérée.

Si c'est le cas, cela signifie que la pression de freinage "Pmc" recommence à augmenter ou tout au moins à stagner. La valeur de la pression de freinage "Pmcₙ₋₁" précédente est considérée comme étant le minimum "Pmc_min". Cette dernière est mémorisée dans l'unité 14 électronique de commande. La valeur de la variable booléenne "Flag_max" redevient égale à zéro. Un exemple de détection de deux minima "Pmc_min1" et "Pmc_min2" est représenté à la figure 6.

Puis l'amplitude "ΔPmc" de la baisse de la pression de freinage est calculée par l'unité 14 électronique en effectuant la différence entre le maximum "Pmc_max" et le minimum "Pmc_min" mémorisés. Pour signaler que cette diminution est calculée, une deuxième variable booléenne "Flag_diff" devient égale à un.

Une troisième étape "E3" d'estimation est déclenchée à l'issue de la deuxième étape "E2", lorsque la deuxième variable booléenne "Flag_diff" est égale à un.

Au cours de cette troisième étape "E3", l'augmentation "Conso" de la pression d'assistance "Pass" dans le réservoir 28 à dépression est estimée en fonction de l'amplitude "ΔPmc" calculée à la deuxième étape "E2".

L'augmentation "Conso" de pression d'assistance "Pass" est tout d'abord estimée en fonction de l'amplitude "ΔPmc" à partir d'une courbe "C1" de correspondance prédéterminée. La courbe "C1" de correspondance est prédéterminée, par exemple de manière expérimentale, et elle est enregistrée dans une mémoire permanente de l'unité 14 électronique de commande.

Dans l'exemple représenté à la figure 7, la courbe "C1" prédéterminée présente la forme d'un escalier de manière à faire correspondre une augmentation "Conso" déterminée de la pression d'assistance "Pass" avec un intervalle déterminé d'amplitude "ΔPmc". Ainsi, lorsque l'amplitude "ΔPmc" est inférieure à un premier seuil "S1", l'augmentation de pression d'assistance "Pass" est égale à une première valeur "Conso_1". Lorsque l'amplitude "ΔPmc" est comprise entre le premier seuil "S1" et un deuxième seuil "S2" supérieur, l'augmentation de la pression d'assistance "Pass" est égale à une deuxième valeur "Conso_2" supérieure à la première, et ainsi de suite.

A l'issue d'une durée de temporisation déterminée, la deuxième variable booléenne "Flag_diff", la valeur de l'amplitude "ΔPmc" et les pressions de freinage maximale "Pmc_max" et minimale "Pmc_min" redeviennent égales à zéro. La deuxième étape "E2" du procédé est alors réitérée.

Lorsque le moteur 12 est redémarré, la pression d'assistance "Pass" estimée dans le réservoir 28 est réinitialisée à sa valeur minimale prédéterminée "Pass_min", par exemple de manière expérimentale.

Afin d'éviter des calculs inutiles, le déclenchement de la deuxième et/ou de la troisième étape "E2, E3" peut être subordonné au fait que le moteur 12 est arrêté automatiquement par l'unité 14 électronique de commande.

Le procédé comporte aussi une quatrième étape "E4" de redémarrage au cours de laquelle le moteur 12 est redémarré lorsque la pression d'assistance "Pass" estimée du réservoir 28 devient supérieure à un seuil "Pass_max" déterminé au-delà duquel le servofrein 26 est considéré comme n'étant plus susceptible de produire un effort suffisant pour assurer le freinage efficace du véhicule.

Bien entendu, cette quatrième étape "E4" est aussi subordonnée au fait que le moteur 12 a été arrêté automatiquement par l'unité 14 électronique de commande.

Le procédé réalisé selon les enseignements de l'invention permet ainsi d'estimer de manière précise la pression d'assistance du réservoir à dépression lorsque le moteur est arrêté automatiquement. L'estimation est réalisée de manière économique en utilisant le capteur de mesure de la pression du fluide de freinage déjà utilisé pour piloter le freinage du véhicule, et en utilisant un moyen de détection du déplacement de l'organe d'actionnement qui est déjà utilisé pour allumer les feux de stop du véhicule.

Le procédé d'estimation mis en oeuvre par l'unité électronique de commande permet une estimation rapide et précise de la pression d'assistance dans le réservoir à dépression.

## Revendications

1. Procédé d'estimation de la pression (Pass) dans un réservoir (28) à dépression d'un servofrein (26) à dépression de véhicule (10) automobile, le véhicule (10) comportant :
- un moteur (12) à combustion interne ;
- au moins un dispositif (16) de freinage commandé par la pression (Pmc) d'un fluide de freinage ;
- un maître-cylindre (22) qui commande la pression (Pmc) du fluide de freinage et qui est actionné par un organe (24) d'actionnement mobile entre une position de repos et une position extrême d'actionnement ;
- un servofrein (26) qui est interposé entre l'organe (24) d'actionnement et le maître-cylindre (22) pour amplifier l'effort de l'organe (24) d'actionnement au moyen d'une dépression fournie par un réservoir (28) maintenu en dépression, à une pression (Pass) d'assistance, lorsque le moteur (12) est démarré ;
- un moyen (25) de détection du déplacement de l'organe (24) d'actionnement au-delà d'une position intermédiaire de garde ;
- un capteur (23) de pression qui est agencé de manière à mesurer la pression (Pmc) de freinage du fluide de freinage ;
**caractérisé en ce qu'**il comporte :
- une première étape (E1) de calcul de la pression (Pmc) de freinage qui est répétée cycliquement ;
- une deuxième étape (E2) de calcul de l'amplitude (ΔPmc) d'une diminution de pression au cours de laquelle le maximum (Pmc_max) puis le minimum (Pmc_min) atteints successivement par la pression de freinage sont mémorisés, et au cours de laquelle l'amplitude (ΔPmc) de la diminution de pression de freinage est calculée en effectuant la différence entre le maximum (Pmc_max) et le minimum (Pmc_min) ;
- une troisième étape (E3) qui est déclenchée à l'issue de la deuxième étape (E2) et au cours de laquelle l'augmentation (Conso) de la pression (Pass) dans le réservoir (28) à dépression est estimée en fonction de l'amplitude (ΔPmc) calculée à la deuxième étape (E2).

2. Procédé selon la revendication précédente, **caractérisé en ce qu'**au cours de la première étape (E1), la pression (Pmc) de freinage calculée est égale à :
- une valeur (V0) de repos tant qu'aucun déplacement de l'organe (24) d'actionnement n'est détecté ; ou à,
- la plus grande valeur entre la mesure (Vm) de la pression (Pmc) par le capteur (23) et une pression (V1) minimale déterminée lorsqu'un déplacement de l'organe (24) d'actionnement est détecté

3. Procédé selon la revendication précédente, **caractérisé en ce que** la troisième étape (E3) est déclenchée lorsque le moteur (12) est arrêté.

4. Procédé selon la revendication précédente, **caractérisé en ce qu'**il comporte une quatrième étape (E4) de redémarrage au cours de laquelle le moteur (12) est redémarré lorsque la pression (Pass) dans le réservoir (28) est supérieure à un seuil (Pass_max) déterminé.

5. Procédé selon l'une quelconque des revendications précédentes, **caractérisé en ce qu'**au cours de la troisième étape (E3), l'augmentation (Conso) de pression dans le réservoir (28) est estimée en fonction de l'amplitude (ΔPmc) de la diminution de pression à partir d'une courbe (C1) de correspondance prédéterminée.

6. Procédé selon la revendication précédente, **caractérisé en ce que** la courbe (C1) prédéterminée présente la forme d'un escalier de manière à faire correspondre une augmentation (Conso) déterminée de la pression (Pass) avec un intervalle déterminé de valeurs d'amplitude (ΔPmc) de diminution de pression de freinage.

7. Procédé selon l'une quelconque des revendications précédentes, **caractérisé en ce que**, lorsque le moteur (12) est redémarré, la pression (Pass) dans le réservoir (28) est réinitialisée à une valeur minimale (Pass_min).

8. Procédé selon l'une quelconque des revendications précédentes, **caractérisé en ce que**, lors de la deuxième étape (E2), une première valeur de pression (Pmcₙ₋₁) est considérée comme un maximum de pression (Pmc_max) lorsqu'une deuxième valeur de pression (Pmcₙ) calculée au cycle suivant de la première étape (E1) est strictement inférieure à la première valeur (Pmcₙ₋₁).

9. Procédé selon l'une quelconque des revendications précédentes, **caractérisé en ce que**, lors de la deuxième étape (E2), une première valeur de pression (Pmcₙ₋₁) est considérée comme un minimum (Pmc_min) lorsque :
- un maximum (Pmc_max) a été atteint précédemment ;
- et une deuxième valeur de pression (Pmcₙ) calculée au cycle suivant de la première étape (E1) est supérieure ou égale à la première valeur de pression (Pmcₙ₋₁).

10. Procédé selon l'une quelconque des revendications précédentes, **caractérisé en ce que** la deuxième étape (E2) est réitérée lorsqu'un minimum (Pmc_min) a été atteint.

## Patentansprüche

1. Verfahren zur Schätzung des Drucks (Pass) in einem Unterdruckbehälter (28) eines Unterdruck-Bremskraftverstärkers (26) eines Kraftfahrzeugs (10), wobei das Fahrzeug (10) umfasst:
- einen Verbrennungsmotor (12);
- wenigstens eine Bremsvorrichtung (16), die durch den Druck (Pmc) eines Bremsfluids gesteuert wird;
- einen Hauptzylinder (22), welcher den Druck (Pmc) des Bremsfluids steuert und welcher von einem Betätigungsorgan (24) betätigt wird, das zwischen einer Ruheposition und einer äußersten Betätigungsposition beweglich ist;
- einen Bremskraftverstärker (26), welcher zwischen dem Betätigungsorgan (24) und dem Hauptzylinder (22) zwischengeschaltet ist, um die Kraft des Betätigungsorgans (24) mittels eines Unterdrucks, der von einem unter Unterdruck gehaltenen Behälter (28) geliefert wird, auf einen Unterstützungsdruck (Pass) zu verstärken, wenn der Motor (12) gestartet wird;
- ein Mittel (25) zur Erfassung der Verlagerung des Betätigungsorgans (24) über eine Schutz-Zwischenposition hinaus;
- einen Drucksensor (23), welcher dazu eingerichtet ist, den Bremsdruck (Pmc) des Bremsfluids zu messen;
**dadurch gekennzeichnet, dass** es umfasst:
- einen ersten Schritt (E1) der Berechnung des Bremsdrucks (Pmc), welcher zyklisch wiederholt wird;
- einen zweiten Schritt (E2) der Berechnung der Amplitude (ΔPmc) einer Druckabnahme, in dessen Verlauf das Maximum (Pmc_max) und anschließend das Minimum (Pmc_min) die nacheinander von dem Bremsdruck erreicht werden, gespeichert werden, und in dessen Verlauf die Amplitude (ΔPmc) der Abnahme des Bremsdrucks berechnet wird, indem die Differenz zwischen dem Maximum (Pmc_max) und dem Minimum (Pmc_min) gebildet wird;
- einen dritten Schritt (E3), welcher am Ende des zweiten Schritts (E2) ausgelöst wird und in dessen Verlauf die Erhöhung (Conso) des Drucks (Pass) in dem Unterdruckbehälter (28) in Abhängigkeit von der im zweiten Schritt (E2) berechneten Amplitude (ΔPmc) geschätzt wird.

2. Verfahren nach dem vorhergehenden Anspruch, **dadurch gekennzeichnet, dass** im Verlauf des ersten Schrittes (E1) der berechnete Bremsdruck (Pmc) gleich
- einem Ruhewert (V0) ist, solange keine Verlagerung des Betätigungsorgans (24) erfasst wird; oder gleich
- dem größeren Wert von der Messung (Vm) des Drucks (Pmc) durch den Sensor (23) und einem bestimmten minimalen Druck (V1), wenn eine Verlagerung des Betätigungsorgans (24) erfasst wird.

3. Verfahren nach dem vorhergehenden Anspruch, **dadurch gekennzeichnet, dass** der dritte Schritt (E3) ausgelöst wird, wenn der Motor (12) abgestellt wird.

4. Verfahren nach dem vorhergehenden Anspruch, **dadurch gekennzeichnet, dass** es eine vierten Schritt (E4) des Neustartens umfasst, in dessen Verlauf der Motor (12) neu gestartet wird, wenn der Druck (Pass) in dem Behälter (28) höher als ein bestimmter Schwellenwert (Pass_max) ist.

5. Verfahren nach einem der vorhergehenden Ansprüche, **dadurch gekennzeichnet, dass** im Verlauf des dritten Schritts (E3) die Druckerhöhung (Conso) in dem Behälter (28) in Abhängigkeit von der Amplitude (ΔPmc) der Druckabnahme ausgehend von einer vorbestimmten Zuordnungskurve (C1) geschätzt wird.

6. Verfahren nach dem vorhergehenden Anspruch, **dadurch gekennzeichnet, dass** die vorbestimmte Kurve (C1) die Form einer Treppe aufweist, so dass bewirkt wird, dass eine bestimmte Erhöhung (Conso) des Drucks (Pass) einem bestimmten Intervall von Werten der Amplitude (ΔPmc) der Abnahme des Bremsdrucks entspricht.

7. Verfahren nach einem der vorhergehenden Ansprüche, **dadurch gekennzeichnet, dass**, wenn der Motor (12) neu gestartet wird, der Druck (Pass) in dem Behälter (28) auf einen minimalen Wert (Pass_min) zurückgesetzt wird.

8. Verfahren nach einem der vorhergehenden Ansprüche, **dadurch gekennzeichnet, dass** beim zweiten Schritt (E2) ein erster Druckwert (Pmcₙ₋₁) als ein Druckmaximum (Pmc_max) betrachtet wird, wenn ein zweiter Druckwert (Pmcₙ), der im folgenden Zyklus des ersten Schritts (E1) berechnet wird, streng kleiner als der erste Wert (Pmcₙ₋₁) ist.

9. Verfahren nach einem der vorhergehenden Ansprüche, **dadurch gekennzeichnet, dass** beim zweiten Schritt (E2) ein erster Druckwert (Pmcₙ₋₁) als ein Minimum (Pmc_min) betrachtet wird, wenn:
- zuvor ein Maximum (Pmc_max) erreicht worden ist;
- und ein zweiter Druckwert (Pmcₙ), der im folgenden Zyklus des ersten Schritts (E1) berechnet wird, größer als der oder gleich dem ersten Druckwert (Pmcₙ₋₁) ist.

10. Verfahren nach einem der vorhergehenden Ansprüche, **dadurch gekennzeichnet, dass** der zweite Schritt (E2) wiederholt wird, wenn ein Minimum (Pmc_min) erreicht worden ist.

## Claims

1. Method for estimating the pressure (Pass) in a vacuum chamber (28) of a vacuum brake servo (26) of a motor vehicle (10), the vehicle (10) comprising:
- an internal combustion engine (12);
- at least one braking device (16) controlled by the pressure (Pmc) of a brake fluid;
- a master cylinder (22), which controls the pressure (Pmc) of the brake fluid and which is actuated by an actuating member (24) movable between a rest position and an end actuation position;
- a brake servo (26), which is arranged between the actuating member (24) and the master cylinder (22) to amplify the force of the actuating member (24) by means of a vacuum, provided by a chamber (28) held under vacuum, to an assistance pressure (Pass) when the engine (12) is started;
- a means (25) for detecting the displacement of the actuating member (24) beyond an intermediate guard position;
- a pressure sensor (23), which is designed to measure the braking pressure (Pmc) of the brake fluid;
**characterized in that** the method comprises:
- a first step (E1) of calculating the braking pressure (PMC), which is repeated cyclically;
- a second step (E2) of calculating the amplitude (ΔPmc) of a reduction in pressure, during which the maximum (Pmc_max) then the minimum (Pmc_min) reached successively by the braking pressure are stored, and during which the amplitude (ΔPmc) of the reduction in braking pressure is calculated by establishing the difference between the maximum (Pmc_max) and the minimum (Pmc_min);
- a third step (E3), which is triggered at the end of the second step (E2) and during which the increase (Conso) of the pressure (Pass) in the vacuum chamber (28) is estimated as a function of the amplitude (ΔPmc) calculated in the second step (E2).

2. Method according to the preceding claim, **characterized in that**, during the first step (E1), the braking pressure (Pmc) calculated is equal to:
- a rest value (V0) as long as no displacement of the actuating member (24) is detected; or to
- the greater value between the measurement (Vm) of the pressure (Pmc) by the sensor (23) and a minimum pressure (V1) determined when a displacement of the actuating member (24) is detected.

3. Method according to the preceding claim, **characterized in that** the third step (E3) is triggered when the engine (12) is stopped.

4. Method according to the preceding claim, **characterized in that** it comprises a fourth step (E4) of restarting, during which the engine (12) is restarted when the pressure (Pass) in the chamber (28) is greater than a determined threshold (Pass_max).

5. Method according to any one of the preceding claims, **characterized in that**, during the third step (E3), the increase (Conso) of pressure in the chamber (28) is estimated as a function of the amplitude (ΔPmc) of the reduction in pressure on the basis of a predetermined correspondence curve (C1).

6. Method according to the preceding claim, **characterized in that** the predetermined curve (C1) has a stepped form so as to match a determined increase (Conso) in pressure (Pass) to a determined range of values of the amplitude (ΔPmc) of reduction in braking pressure.

7. Method according to any one of the preceding claims, **characterized in that**, when the engine (12) is restarted, the pressure (Pass) in the chamber (28) is reset to a minimum value (Pass_min).

8. Method according to any one of the preceding claims, **characterized in that**, during the second step (E2), a first pressure value (Pmcₙ₋₁) is considered as a pressure maximum (Pmc_max) when a second pressure value (Pmcₙ) calculated in the cycle following the first step (E1) is strictly lower than the first value (Pmcₙ₋₁).

9. Method according to any one of the preceding claims, **characterized in that**, during the second step (E2), a first pressure value (Pmcₙ₋₁) is considered as a minimum (Pmc_min) when:
- a maximum (Pmc_max) was reached beforehand;
- and a second pressure value (Pmcₙ) calculated in the cycle following the first step (E1) is greater than or equal to the first pressure value (Pmcₙ₋₁).

10. Method according to any one of the preceding claims, **characterized in that** the second step (E2) is repeated when a minimum (Pmc_min) has been reached.
